# EUROPEAN PATENT APPLICATION

(11) **EP 2 068 231 A2**
(43) Date of publication of application: **10.06.2009**
(21) Application number: 08168845.9
(22) Date of filing: 11.11.2008
(51) Int. Cl.: G06F 3/033

(54) **Touch pad having electromagnetic interference shielding plate**

(30) Priority: 27.11.2007 KR 20070121597
(71) Applicant: Samsung Electronics Co., Ltd., Suwon-si, Gyeonggi-Do (KR)
(72) Inventor: Kim, Jong Min, Suwon-si Gyeonggi-do (KR); Choi, Hong Giu, Suwon-si Gyeonggi-do (KR); Kim, Soo Hyung, Suwon-si Gyeonggi-do (KR); Lee, Jung Hyeong, Suwon-si Gyeonggi-do (KR)
(74) Representative: Harrison Goddard Foote

(57) **Abstract**

A touch pad including an ElectroMagnetic Interference (EMI) shielding plate and method for detecting a touch on the touch pad is provided. The touch pad includes a touch plate for generating, when a touch is generated on a surface of the touch plate, a change of a physical property, a touch sensor coupled to the touch plate for detecting a position of the generated touch by measuring the change of the physical property, and an EMI shielding plate disposed adjacent to or attached to a surface of the touch plate and formed with a plurality of openings. The density of the openings formed at a position of the EMI shielding plate increases as the position becomes farther from the touch sensor. Accordingly, the touch pad having an EMI shielding plate can more accurately detect a touch generated at any position close to or remote from the touch sensor of the touch pad, and thereby increase user convenience of a portable terminal.

## Description

### BACKGROUND OF THE INVENTION

### 1. Field of the Invention:

The present invention relates to a touch pad. More particularly, the present invention relates to a touch pad having an electromagnetic interference shielding plate.

### 2. Description of the Related Art:

With the development of portable terminals, such as a mobile phone and a Personal Digital Assistance (PDA), the use of portable terminals has become widespread. Further, with the popularization of portable terminals, user's requirements have become more diversified and competition between portable terminal manufacturers has increased. Accordingly, portable terminals that provide an increasing number of functions and that can be used more conveniently are continuously being developed. In particular, with the provision of various multimedia functions and a wireless Internet function, an operating environment of portable terminals is developing to a level similar to that of a personal computing environment.

Portable terminals are manufactured in a relatively small form, because the portable terminals provide convenience through portability. Accordingly, a size of an input device and an output device, such as a keypad and a Liquid Crystal Display (LCD), are limited. Thus, to provide portable terminals with various functions and to improve user accessibility and convenience in performing the functions, further development of new user interfaces is needed. Further, the demand for a portable terminal user interface suitable for use in an operating environment similar to the personal computing environment is increasing. For this, a user interface utilizing a touch pad for detecting a touch in a portable terminal has been developed.

However, it is not easy to uniformly detect a touch using a touch sensor of a conventional touch pad. For example, a touch occurring at a position close to the touch sensor may be consistently detected, but a touch generated at a position remote from the touch sensor may not be consistently detected. Therefore, user convenience of portable terminals is decreased.

### SUMMARY OF THE INVENTION

An aspect of the present invention is to address at least the above-mentioned problems and/or disadvantages and to provide at least the advantages described below. Accordingly, an aspect of the present invention is to provide a touch pad having an ElectroMagnetic Interference (EMI) shielding plate for uniformly detecting touches.

According to an aspect of the present invention, a touch pad is provided. The touch pad includes a touch plate for generating, when a touch is generated on a surface of the touch plate, a change of a physical property, a touch sensor coupled to the touch plate for detecting a position of the generated touch by measuring the change of the physical property, and an ElectroMagnetic Interference (EMI) shielding plate disposed adjacent to or attached to a surface of the touch plate and formed with a plurality of openings. The density of the openings formed at a position of the touch plate may increase as the position becomes farther from the touch sensor.

According to another aspect of the present invention, a method for a touch pad is provided. The method includes generating a change of a physical property when a touch on a surface of a touch plate is generated, and detecting a position of the generated touch by measuring the change of the physical property, wherein an EMI shielding plate is disposed adjacent to or attached to a surface of the touch plate and formed with a plurality of openings.

According to an aspect of the present invention, the touch pad having an EMI shielding plate can more uniformly detect a touch. That is, a touch generated at any position close to or remote from the touch sensor of the touch pad may more accurately be detected, and thereby increase user convenience of a portable terminal.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description in conjunction with the accompanying drawings, in which:

FIG. 1 is an exploded perspective view illustrating a configuration of a touch pad according to an exemplary embodiment of the present invention; and

FIG. 2 is an exploded perspective view illustrating a configuration of a touch pad according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

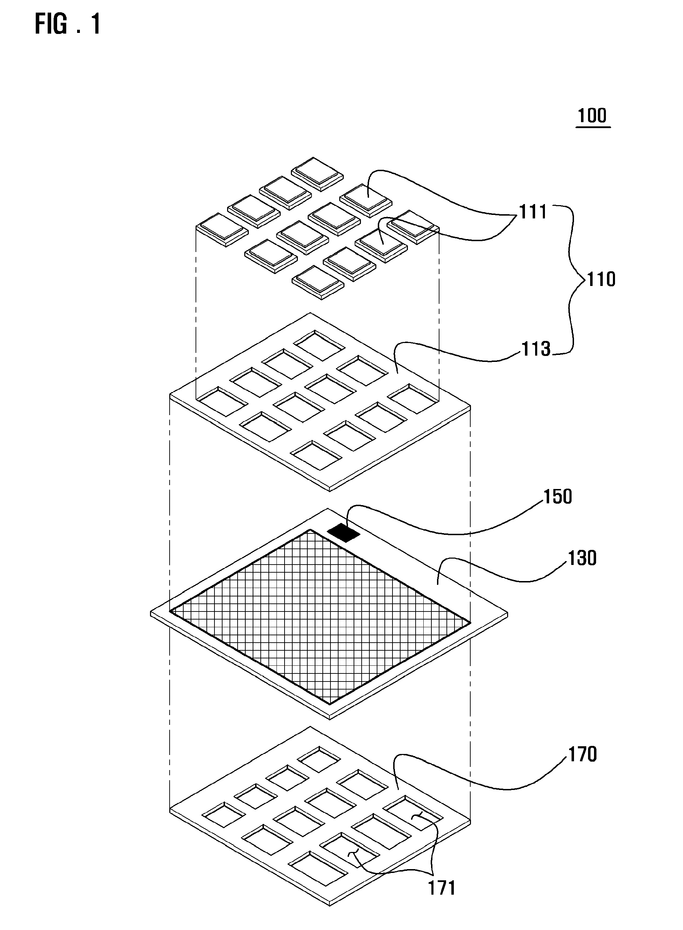

FIG. 1 is an exploded perspective view illustrating a configuration of a touch pad 100 according to an exemplary embodiment of the present invention.

Referring to FIG. 1, the touch pad 100 may include a key plate 110, a touch plate 130, a touch sensor 150, and an ElectroMagnetic Interference (EMI) shielding plate 170.

The key plate 110 may include a plurality of key caps 111 and a rubber plate 113 for holding the plurality of key caps 111 in a group. At least one of a character, numeral, symbol, and function may be allocated to each key cap 111. The quantity of key caps 111 may be determined according to the quantity of the at least one of the characters, numerals, symbols and functions to be allocated to the key caps 111. The key caps 111 may protrude at a defined height from the rubber plate 113. A user may select a key by pressing a corresponding key cap 111 to be level with, or lower than, the upper surface of the rubber plate 113.

The touch plate 130 may be installed adjacent to or under the key plate 110 and may be formed as a Printed Circuit Board (PCB). When a touch is generated on the surface of the key plate 110, a physical property of the touch plate 130 may change. For example, if a key cap 111 is selected from the key plate 110, a touch may be generated on the surface of the touch plate 130 by pressing the key cap 111. The physical property changing according to the touch may be capacitance. That is, the touch plate 130 may have a structure in which an electrically charged sheet (not shown) uniformly accumulating electric charges on its upper surface is disposed adjacent to or attached to the touch plate 130. When a touch is generated at a position of the surface of the touch plate 130, the electric charges accumulated on the electrically charged sheet are concentrated at the touch position, and thereby capacitance increases at the touch position.

The touch sensor 150 may be installed at a preset position of the touch plate 130, and may detect a touch position by measuring a change of a physical property in the touch plate 130. For example, the touch sensor 150 may detect a position of the touch plate 130 at which the capacitance increases, and then may generate a signal corresponding to the detected touch position.

The EMI shielding plate 170 may be disposed adjacent to or attached to the lower surface of the touch plate 130, and may have a structure formed with a plurality of openings 171 for exposing corresponding areas of the touch plate 130. The openings 171 partially degrade an EMI shielding function of the touch plate 130 at the position of the openings 171, and thereby areas of the touch plate 130 exposed by the openings 171 have a lower capacitance than the remaining area. Each opening 171 may be formed at a position corresponding to one of the key caps 111, and in different sizes according to the relative position of the touch plate 130 corresponding to the openings 171. For example, the openings 171 located close to the touch sensor 150 may be formed in a smaller size than the openings 171 located remote from the touch sensor 150.

Hereinafter, an operation of the touch pad 100 having the above configuration is described. A user may select a key by pressing a corresponding key cap 111 to be level with, or lower than, the upper surface of the rubber plate 113. A touch generated on the surface of the touch plate 130 by the key cap 111 changes a physical property of the touch plate 130. For example, capacitance of the touch plate 130 increases at the touch position. The touch sensor 150 may detect the touch position by measuring the physical property of the touch plate 130. The touch sensor 150 may then compare capacitance of the touch plate 130 measured before the touch generation with the capacitance of the touch plate 130 measured during the touch generation.

Because the EMI shielding function is reduced in areas of the touch plate corresponding to the openings 171 of the EMI shielding plate 170, capacitance of the touch plate 130 corresponding to the opening 171 of the EMI shielding plate 170 is comparatively low. Accordingly, if a touch is generated, capacitance of the touch plate 130 increases at the touch position. In this case, the greater the size of the opening 171 corresponding to the touch position of the touch plate 130, the greater the capacitance at the touch position, because the EMI shielding function in areas of the touch plate 130 corresponding to the openings 171 of the EMI shielding plate is greatly reduced as the size of the opening 171 increases. Accordingly, the touch position may be more easily detected because capacitance formed by generation of a touch on the touch plate 13 is greatly increased.

An exemplary embodiment of the present invention has been described with a touch pad that may have an EMI shielding plate formed with openings in different sizes. However, the present invention is not limited thereto. For example, the present invention may be embodied by using an EMI shielding plate having openings formed in an identical size.

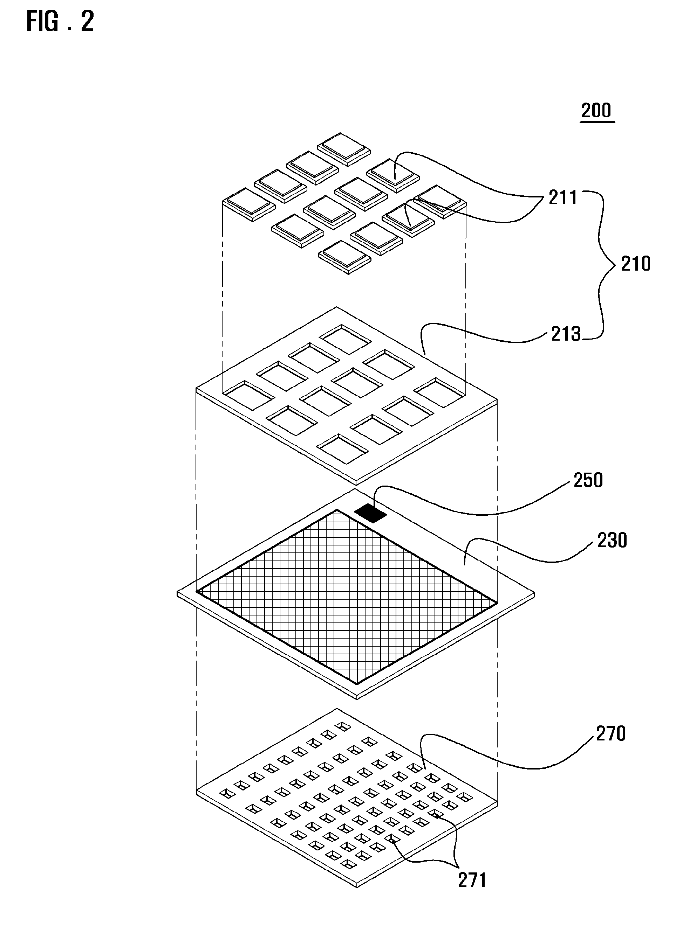

FIG. 2 is an exploded perspective view illustrating a configuration of a touch pad 200 according to an exemplary embodiment of the present invention.

Referring to FIG. 2, the touch pad 200 may include a key plate 210, touch plate 230, touch sensor 250, and EMI shielding plate 270. The basic configuration of the touch pad 200 is similar to that of the touch pad described above with reference to FIG. 1. Therefore, only the EMI shielding plate 270, which is different from the EMI shielding plate described above with reference to FIG. 1, is described in detail hereinafter.

The EMI shielding plate 270 is disposed adjacent to or attached to the lower surface of the touch plate 230, and may have a structure formed with a plurality of openings 271 for exposing corresponding areas of the touch plate 230. The openings 271 partially degrade an EMI shielding function of the touch plate 230 at the position of the openings 271, and thereby areas of the touch plate 230 exposed by the openings 271 have lower capacitance than the remaining area. The openings 271 may be formed in the EMI shielding plate 270 at different densities in a given area according to the relative position of the touch plate 230. The openings 271 may have an identical size, and different quantities of the openings 271 may be formed corresponding to the position of each key cap 211. For example, more openings 271 may be formed for a key cap 211 at a position remote from the touch sensor 250 than for a key cap 211 at a position close to the touch sensor 250.

Hereinafter, operation of the touch pad 200 having the above configuration is described. A user may select a key by pressing a key cap 211 to be level with, or lower than, the upper surface of the rubber plate 213. A touch generated on the surface of the touch plate 230 by the key cap 211 changes a physical property of the touch plate 230. For example, capacitance of the touch plate 230 increases at the touch position. The touch sensor 250 may detect the touch position by measuring the physical property of the touch plate 230. The touch sensor 250 may then compare capacitance of the touch plate 230 measured before the touch generation with the capacitance of the touch plate 230 measured during the touch generation.

Because the EMI shielding function is reduced in areas of the touch plate corresponding to the openings 271 of the EMI shielding plate 270, capacitance of the touch plate 230 corresponding to the openings 271 of the EMI shielding plate 270 is comparatively low. Accordingly, if a touch is generated, capacitance of the touch plate 230 increases at the touch position. In this case, the greater the quantity of openings 271 corresponding to the touch position of the touch plate 230, the greater the capacitance at the touch position, because the EMI shielding function in areas of the touch plate 130 corresponding to the openings 271 may be greatly reduced as the quantity of the openings 271 increases. Accordingly, the touch position can be more easily detected, because capacitance formed by generation of a touch on the touch plate 13 is greatly increased.

An exemplary embodiment of the present invention has been described with a touch pad having a key plate. However, the present invention is not limited thereto. The present invention may be embodied without using a key plate. For example, the touch sensor may be provided to detect a touch position by measuring a change of physical property when a touch is generated on the touch plate without selection of a key cap.

According to exemplary embodiments of the present invention, a touch pad having an EMI shielding plate may accurately detect a touch generated at any position close to or remote from the touch sensor of the touch pad, and thereby increase user convenience of a mobile terminal.

While the invention has been shown and described with reference to certain exemplary embodiments thereof, it will be understood those skilled in the art that various changes in form and details may be made therein without departing from the spirit and scope of the present invention as defined in the appended claims and their equivalents.

## Claims

1. A touch pad comprising:
a touch plate for generating, when a touch is generated on a surface of the touch plate, a change of a physical property;
a touch sensor coupled to the touch plate for detecting a position of the generated touch by measuring the change of the physical property; and
an ElectroMagnetic Interference (EMI) shielding plate disposed adjacent to or attached to a surface of the touch plate and formed with a plurality of openings.

2. The touch pad of claim 1, wherein the touch plate comprises an electrically charged plate for accumulating electric charges, and capacitance at an area of the electrically charged plate corresponding to openings of the EMI shielding plate is less than the capacitance in the remaining area.

3. The touch pad of claims 1 or 2, wherein a size of the opening formed at a position of the EMI shielding plate increases as the position becomes farther from the touch sensor.

4. The touch pad of claims 1 or 2, wherein sizes of the openings formed in the EMI shielding plate are identical to each other.

5. The touch pad of any of claims 1 to 4, wherein a density of the openings formed at a position of the EMI shielding plate increases as the position becomes farther from the touch sensor.

6. The touch pad of any of claims 1 to 5, further comprising a key plate disposed adjacent to or installed at an opposite side of the touch plate to the surface of the touch plate the EMI shielding plate is disposed adjacent to or attached to, having a plurality of key caps, and for generating, when a key cap is pressed, a touch on the surface of the key plate.

7. The touch pad of any of claims 1 to 6, wherein the touch sensor detects a position of the generated touch by comparing the physical property measured before the touch generation with the physical property measured during the touch generation.

8. A method for detecting a touch on a touch pad, the method comprising:
generating a change of a physical property when a touch on a surface of a touch plate is generated; and
detecting a position of the generated touch by measuring the change of the physical property,
wherein an ElectroMagnetic Interference (EMI) shielding plate is disposed adjacent to or attached to a surface of the touch plate and formed with a plurality of openings.

9. The method of claim 8, wherein the touch plate comprises an electrically charged plate for accumulating electric charges, and capacitance at an area of the electrically charged plate corresponding to openings of the EMI shielding plate is less than the capacitance in the remaining area.

10. The method of claims 8 or 9, wherein a size of the opening formed at a position of the EMI shielding plate increases as the position becomes farther from the touch sensor.

11. The method of claims 8 or 9, wherein sizes of the openings formed in the EMI shielding plate are identical to other.

12. The method of any of claims 8 to 11, wherein the density of the openings formed at a position of the EMI shielding plate increases as the position becomes farther from the touch sensor.

13. The method of any of claims 8 to 12, wherein a key plate is disposed adjacent to or installed at an opposite side of the touch plate to the surface of the touch plate the EMI shielding plate is disposed adjacent to or attached to, having a plurality of key caps, and for generating, when a key cap is pressed, a touch on the surface of the key plate.

14. The method of any of claims 8 to 13, wherein the detecting of the position of the generated touch comprises comparing the physical property measured before the touch generation with the physical property measured during the touch generation.
